# EUROPEAN PATENT APPLICATION

(11) **EP 4 665 073 A1**
(43) Date of publication of application: **17.12.2025**
(21) Application number: 23920539.6
(22) Date of filing: 10.02.2023
(51) Int. Cl.: H04W 76/15

(54) **LINK OPERATION MODE SWITCHING METHODS AND APPARATUSES, COMMUNICATION DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: LU, Liuming, Dongguan, Guangdong 523860 (CN); LUO, Chaoming, Dongguan, Guangdong 523860 (CN); ZHOU, Pei, Dongguan, Guangdong 523860 (CN)
(74) Representative: Taor, Simon Edward William
(86) International application number: PCT/CN2023/075517
(87) International publication number: WO 2024/164331

(57) **Abstract**

A method and apparatus for link operation mode switching, a communication device, and a storage medium relate to the field of wireless communication technology. The method is executed by a first device. At least two links are established between the first device and a second device. The first device and the second device are multi-link devices. The method includes the following. Link operation mode switching information is sent to the second device (601), where the link operation mode switching information indicates to switch a link operation mode of a first link, and the first link is one of the at least two links. The link operation mode of the first link between the first device and the second device is switched according to the link operation mode switching information (602).

## Description

### TECHNICAL FIELD

The present disclosure relates to the field of wireless communication technology, and more particularly to a method and apparatus for link operation mode switching, a communication device, and a storage medium.

### BACKGROUND

In wireless local area networks (WLANs), multi-link devices (MLDs) can establish multiple wireless links simultaneously to enhance wireless transmission capabilities.

In the related art, an MLD may include multiple affiliated access points (APs) or affiliated stations (STAs), and each affiliated AP/affiliated STA can establish a corresponding link with another MLD.

### SUMMARY

Embodiments of the present disclosure provide a method and apparatus for link operation mode switching, a communication device, and a storage medium. The technical solution is as follows.

In an aspect, embodiments of the present disclosure provide a method for link operation mode switching, which is executed by a first device. At least two links are established between the first device and a second device. The first device and the second device are multi-link devices (MLDs). The method includes the following. Link operation mode switching information is sent to the second device, where the link operation mode switching information indicates to switch a link operation mode of a first link, and the first link is one of the at least two links. The link operation mode of the first link between the first device and the second device is switched according to the link operation mode switching information.

In an aspect, embodiments of the present disclosure provide a method for link operation mode switching, which is executed by a second device. At least two links are established between a first device and the second device. The first device and the second device are MLDs. The method includes the following. Link operation mode switching information sent by the first device is received, where the link operation mode switching information indicates to switch a link operation mode of a first link, and the first link is one of the at least two links. The link operation mode of the first link between the first device and the second device is switched according to the link operation mode switching information.

In another aspect, embodiments of the present disclosure provide an apparatus for link operation mode switching. The apparatus includes a sending module and a switching module. The sending module is configured to send link operation mode switching information to the second device, where the link operation mode switching information indicates to switch a link operation mode of a first link, and the first link is one of at least two links established between the first device and the second device. The first device and the second device are MLDs. The switching module is configured to switch link operation mode of the first link between the first device and the second device according to the link operation mode switching information.

In another aspect, embodiments of the present disclosure provide an apparatus for link operation mode switching. The apparatus includes a receiving module and a switching module. The receiving module is configured to receive link operation mode switching information sent by the first device, where the link operation mode switching information indicates to switch a link operation mode of a first link, and the first link is one of at least two links established between the first device and the second device. The first device and the second device are MLDs. The switching module is configured to switch link operation mode of the first link between the first device and the second device according to the link operation mode switching information.

In another aspect, embodiments of the present disclosure provide a communication device. The communication device is an MLD. The communication device includes a processor, a memory and a transceiver. The memory stores a computer program which is executable by the processor to achieve the above method for link operation mode switching.

In another aspect, embodiments of the present disclosure provide a computer-readable storage medium. The storage medium stores a computer program. The computer program is loadable and executable by a processor to implement the above method for link operation mode switching.

In another aspect, a computer program product is provided. The computer program includes computer instructions, which are stored in a computer-readable storage medium. A processor of a communication device can read from the computer-readable storage medium and executes the computer instructions, thereby causing the communication device to perform the above-mentioned method for link operation mode switching.

In another aspect, a chip is provided, which is configured to operate in a communication device to cause the communication device to perform the above-mentioned method for link operation mode switching.

In another aspect, a computer program is provided, which is executable by a processor of a communication device to perform the above-mentioned method for link operation mode switching.

The technical solution provided in embodiments of the present disclosure can bring the following beneficial effects.

In the case that multiple link operation modes are configured for links established by multi-link devices and at least two links are established between two multi-link devices, one multi-link device can send link operation mode switching information to another multi-link device to switch a link operation mode of a first link among the at least two links, thereby enhancing the flexibility of link management between the multi-link devices.

### BRIEF DESCRIPTION OF THE DRAWINGS

In order to more clearly illustrate the technical solution in the embodiments of the present disclosure, the drawings used in the description of the embodiments will be briefly introduced below. It should be apparent that the drawings described below are merely some embodiments of the present disclosure. For those of ordinary skill in the art, other drawings can be obtained from these drawings without making any creative effort.
FIG. 1 is a schematic diagram of a network architecture of a communication system according to an embodiment of the present disclosure.
FIG. 2 is a schematic diagram of a reference model of multi-link devices according to an embodiment of the present disclosure.
FIG. 3 is a diagram illustrating multi-link discovery and setup sequences involved in an exemplary embodiment of the present disclosure.
FIG. 4 is a schematic diagram of beacon interval (BI) structure involved in the present disclosure.
FIG. 5 is a schematic diagram illustrating request and response frame exchanges during the ATI involved in the present disclosure.
FIG. 6 is a flowchart of a method for link operation mode switching according to an embodiment of the present disclosure.
FIG. 7 is a flowchart of a method for link operation mode switching according to an embodiment of the present disclosure.
FIG. 8 is a schematic diagram illustrating link operation mode switching involved in an embodiment of the present disclosure.
FIG. 9 is a flowchart of a method for link operation mode switching according to an embodiment of the present disclosure.
FIG. 10 is a diagram illustrating format definition of a controlled and independent operation mode switch control field involved in the embodiment illustrated in FIG. 9.
FIG. 11 is a schematic diagram of a method for switching initiated by a non-AP multi-link device involved in the embodiment illustrated in FIG. 9.
FIG. 12 is a schematic diagram of a method for switching initiated by a non-AP multi-link device involved in the embodiment illustrated in FIG. 9.
FIG. 13 is a schematic diagram of a method for switching initiated by an AP multi-link device involved in the embodiment illustrated in FIG. 9.
FIG. 14 is a schematic diagram of a method for switching initiated by an AP multi-link device involved in the embodiment illustrated in FIG. 9.
FIG. 15 is a block diagram of an apparatus for link operation mode switching according to an embodiment of the present disclosure.
FIG. 16 is a block diagram of an apparatus for link operation mode switching according to an embodiment of the present disclosure.
FIG. 17 is a schematic structural diagram of a communication device according to an embodiment of the present disclosure.

### DETAILED DESCRIPTION

To make the objectives, technical solutions, and advantages of the present disclosure clearer, the implementation methods of the present disclosure will be further described in detail below in conjunction with the accompanying drawings.

Network architectures and service scenarios described in embodiments of the present disclosure are intended to more clearly illustrate the technical solutions of the present disclosure and do not limit the technical solutions provided by the present disclosure. It is known to those of ordinary skill in the art that, with the evolution of network architecture and the emergence of new business scenarios, the technical solutions provided by the present disclosure are equally applicable to similar technical problems.

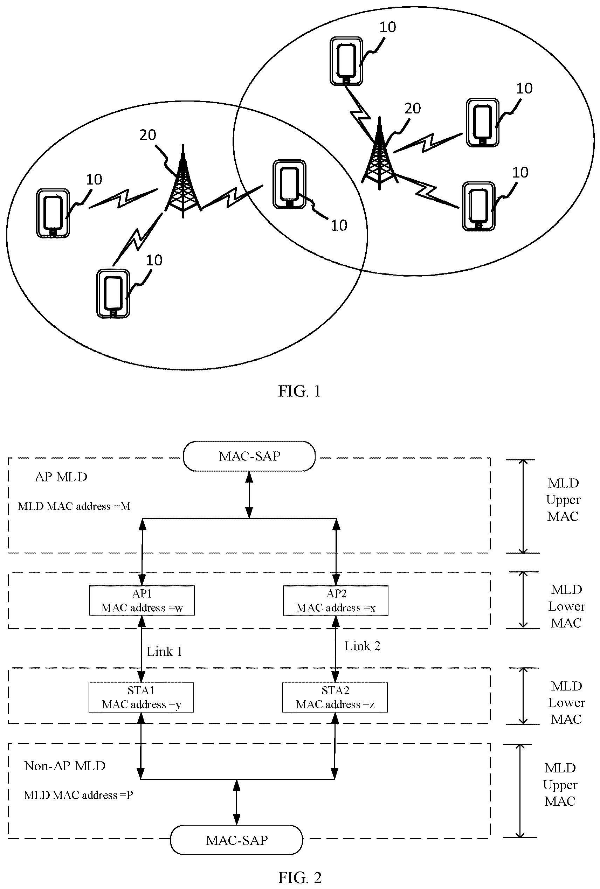

FIG. 1 illustrates a schematic diagram of a network architecture of a communication system according to an embodiment of the present disclosure. The network architecture may include station 10 and access point 20.

The number of station 10 is typically multiple, and each access point 20 may be associated with one or more stations 10. Station 10 may include various handheld devices, in-vehicle devices, wearable devices, or computing devices with wireless communication functions, or other processing devices connected to wireless modems, as well as various forms of user equipment (UE), mobile station (MS), terminal device, etc. For convenience of description, in the embodiments of the present disclosure, the above-mentioned devices are collectively referred to as station (STA).

Access point 20 is a device deployed in an access network to provide wireless communication functions for station 10 and may also be referred to as an AP. Access point 20 may include various forms of wireless routers, wireless switches, or wireless relay devices, etc.

The above-mentioned station 10 and/or access point 20 may be multi-link devices (MLDs).

Optionally, though not illustrated in FIG. 1, the above-mentioned network architecture may also include other network devices, such as a gateway device, etc.

Station 10 and access point 20 may be associated and communicate through wireless local area network technology, for example, by communicating based on the IEEE 802.11 protocol.

The IEEE 802.11 BF working group is currently discussing and developing protocols to specify how to use WLAN signals compliant with the IEEE 802.11 protocol to achieve WLAN awareness. WLAN terminals participating in awareness may have roles such as awareness session initiators, awareness session responders, awareness signal senders, and awareness signal receivers.

A WLAN awareness session includes one or more of the following phases: session establishment, awareness measurement, awareness reporting, and session termination. A WLAN terminal may play one or more roles in an awareness session. For example, an awareness session initiator may be solely an awareness session initiator, may also become an awareness signal sender, may also become an awareness signal receiver, or may be both an awareness signal sender and an awareness signal receiver simultaneously.

Before introducing the technical solution of the present disclosure, some technical knowledge involved in the present disclosure will be introduced and explained first.

### 1) Multi-Link Device (MLD)

In relevant standard protocols, the function of supporting multiple links has been defined. According to the definitions in the standard protocols for two ends of communication, one is STA MLD, and the other is AP MLD. STA MLD and AP MLD that have established multiple links with each other can leverage the advantages of multiple links to transmit and receive data over the multiple links, thus achieving high throughput/low latency, etc.

For traditional single-link devices, each single-link device has a single media access control (MAC) address, which can be used to identify the single-link device. For multi-link devices defined in relevant standards, since there are multiple links in one multi-link device, each link has an independent MAC address, and additionally one multi-link device also has a single MLD MAC address.

FIG. 2 illustrates a schematic diagram of a reference model of multi-link devices. As illustrated in FIG. 2, there are two links, i.e. Link 1 and Link 2, between two multi-link devices. Each multi-link device has an independent link MAC address (or called wireless medium (WM) MAC address) for each link in the lower MAC layer, and further has a single MLD MAC address in the upper MAC layer.

### 2) Multi-link Discovery and Multi-link Setup

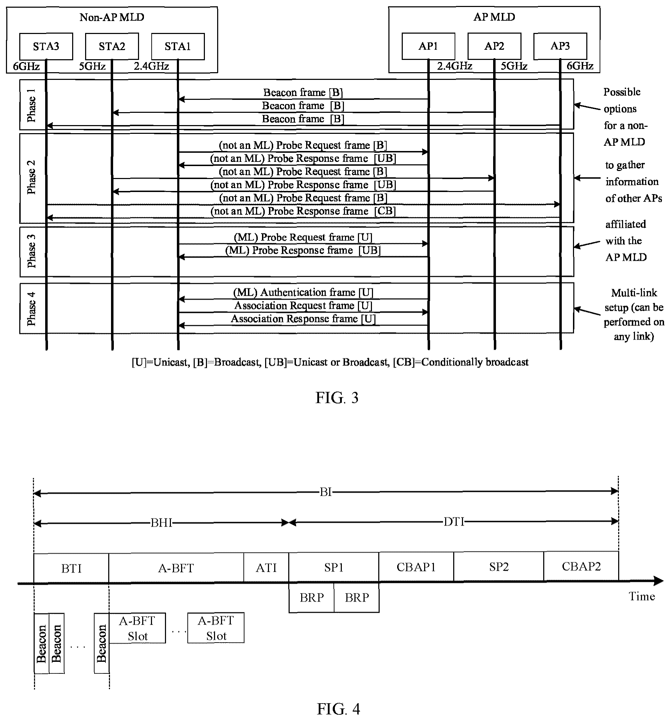

FIG. 3 illustrates multi-link discovery and setup sequences involved in an exemplary embodiment of the present disclosure. As illustrated in FIG. 3, before initiating multi-link setup with an AP MLD, a non-AP MLD obtains information about the AP MLD and each affiliated AP of interest in one or more of the following manners:
1. Perform passive scanning or active scanning procedures related to non-multi-link operations as specified in the IEEE 802.11 standard through each affiliated STA of the non-AP MLD;
2. Transmit a multi-link probe request on any one of the links operated by the AP MLD through one of the affiliated STAs of the non-AP MLD to obtain complete profile about the AP MLD and its affiliated APs.

As illustrated in FIG. 3, the non-AP MLD and the AP MLD performs multi-link setup by exchanging Association Request/Response frames on one of the links requested for setup. Both the Association Request and Response frames carry a basic multi-link element, which is used by the non-AP MLD performing the multi-link setup to indicate in the Association Request frame multiple links requested for setup, as well as capabilities and operation parameters of multiple links. The AP MLD indicates in the Association Response frame the requested link(s) that are accepted for setup and requested link(s) that are rejected for setup, along with capabilities and operation parameters of the requested links.

Upon successful multi-link setup, the AP MLD assigns an Association Identifier (AID) to the non-AP MLD, and all affiliated STAs of the non-AP MLD have the same AID (i.e., the AID assigned to the non-AP MLD during the multi-link setup). After the non-AP MLD and the AP MLD complete the multi-link setup, the non-AP MLD and the AP MLD have established multiple links for multi-link operations, and the non-AP MLD is associated with the AP MLD (i.e., Phase 3 or Phase 4).

### 3) Millimeter-Wave Communication Technology

IEEE 802.11ad is a Wi-Fi communication technology that uses the unlicensed millimeter-wave band to provide multi-Gbps throughput; IEEE 802.11ay further employs technologies such as Multiple-In Multiple-Out (MIMO), channel bonding, channel access optimization, and advanced beamforming training on the basis of IEEE 802.11ad to provide Wi-Fi communication technology with up to 100 Gb/s throughput.

For the media access control (MAC) technology of millimeter-wave band communication, IEEE 802.11ay, like 802.11ad, organizes medium access within a Beacon Interval (BI). FIG. 4 illustrates a schematic diagram of the BI structure involved in the present disclosure. As illustrated in FIG. 4, a typical BI is mainly composed of two access periods: Beacon Header Interval (BHI) and Data Transmission Interval (DTI).

Beacon Transmission Interval (BTI): Used by the AP or Personal Basic Service Set (PBSS) Control Point (PCP) to transmit beacon frames.

Association Beamforming Training (A-BFT): Used for the station to perform beamforming training with a station that transmitted the Beacon frame in the previous BTI period.

A-BFT is slotted and can consist of multiple A-BFT slots. The station may randomly select one of the slots to transmit Sector Sweep (SSW) frames or short SSW frames. In this case, conflicts may occur when two or more stations select the same slot. To accommodate a larger number of stations attempting to access during the A-BFT period, IEEE 802.11ay supports up to 40 A-BFT slots for each BI.

Announcement Transmission Interval (ATI): Used for management frame exchange between the AP/PCP and the station that has completed beamforming training.

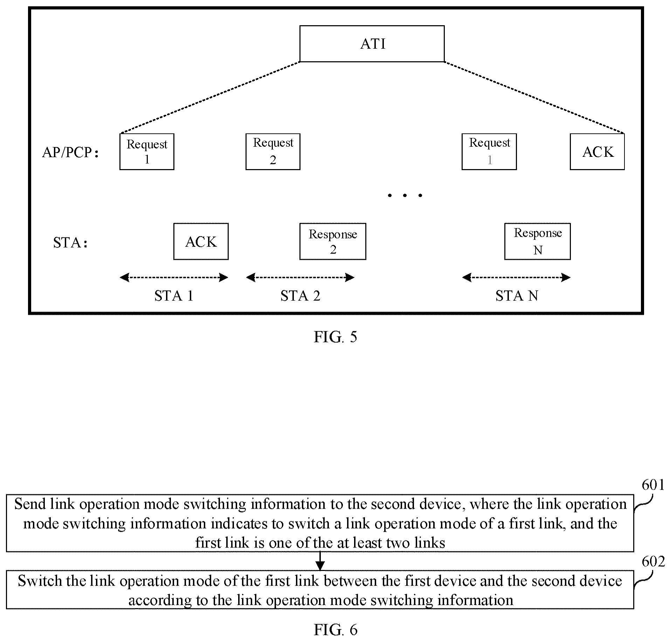

FIG. 5 illustrates the exchange of request and response frames between the AP or PCP and any subset of stations during the ATI involved in the present disclosure. As illustrated in FIG. 5, the AP or PCP initiates all frame exchange sequences during the ATI. Once the ATI begins, the AP or PCP may immediately start transmission of a request frame, or delay the transmission of the request frame if the medium is determined to be busy through the CCA mechanism.

The DTI provides different types of medium access and beamforming training for data transmission. In the DTI, data frames are either exchanged during Contention-Based Access Periods (CBAPs) or communicated in a contention-free manner during Service Periods (SPs).

Due to the disadvantages of millimeter-wave communication, such as significant signal attenuation, susceptibility to blockage, short coverage distance, high cost of millimeter-wave components, and high power consumption of millimeter-wave communication devices, the problems associated with millimeter-wave communication cannot be solved if millimeter-wave devices rely solely on millimeter-wave links. With the standardization of Multi-link Operation (MLO) technology in IEEE 802.11be (Wi-Fi 7), it is possible to consider a multi-link communication technology that combines millimeter-wave links with lower-frequency links based on the MLO architecture and technology. That is, in a device supporting millimeter-wave communication, in addition to one link operating in the millimeter-wave band, at least one link operates in the lower-frequency band. The control and management functions are implemented on the lower-frequency link, while the millimeter-wave link is mainly used for transmission of high-throughput data. Therefore, for multi-link communication devices that support millimeter-wave communication, how to coordinate operations between the millimeter-wave link and the lower-frequency link, in order to meet the communication needs of the devices while reducing power consumption and improving transmission efficiency, is a problem that needs to be solved.

FIG. 6 illustrates a flowchart of a method for link operation mode switching according to an embodiment of the present disclosure. The method may be performed by a first device, which has established at least two links with a second device. The first device and the second device are multi-link devices. For example, the first device and the second device can be the station 10 and the access point 20 in the network architecture illustrated in FIG. 1, respectively. The method may include the following steps.

Step 601: link operation mode switching information is sent to the second device. The link operation mode switching information indicates to switch a link operation mode of a first link. The first link is one of the at least two links.

In some embodiments, the link operation mode switching information is carried by a Management frame that is scheduled aperiodically (or referred to as an aperiodically-scheduled management frame, or aperiodic management frame).

For example, the link operation mode switching information may be carried by an Action frame.

Specifically, the link operation mode switching information may be carried by a notification-type Action frame (which may also be referred to as a Notification frame).

The Management frame carrying the link operation mode switching information may be a Management frame that is aperiodically transmitted. For example, the Management frame carrying the link operation mode switching information may be a Management frame triggered by link mode switching.

The Management frame carrying the link operation mode switching information may be a Management frame dedicated for triggering link mode switching. Optionally, the Management frame carrying the link operation mode switching information may reuse an existing Management frame, that is, a Management frame shared with other MLOs than the link operation mode switching.

In some embodiments, each link for the multi-link device may be configured with two or more link operation modes.

In some embodiments, the above link operation mode may be used to define at least one of the following: a type of a frame transmitted over the corresponding link, a management manner of the corresponding link, and a transmission manner of a Management frame for the corresponding link, etc.

That is to say, for the same link, the types of frames transmitted over the link, the management manners of the link, and the transmission manners of the Management frames for managing the link, may vary under different link operation modes.

The first device and the second device may be an AP multi-link device and a non-AP multi-link device, respectively.

For example, the first device may be an AP multi-link device, and the second device may be a non-AP multi-link device; or the first device may be a non-AP multi-link device, and the second device may be an AP multi-link device.

In some embodiments, an AP multi-link device may include multiple affiliated APs or affiliated PCPs, and the first link refers to a link established between any one of the affiliated APs or affiliated PCPs in the AP multi-link device and the non-AP multi-link device.

From the perspective of the non-AP multi-link device, the non-AP multi-link device may include multiple affiliated STAs, and the first link refers to a link established between any one of the affiliated STAs in the non-AP multi-link device and the corresponding AP/affiliated PCP in the second device.

In some embodiments, the first device among the AP multi-link device and the non-AP multi-link device may send the link operation mode switching information via a Management frame that is transmitted aperiodically, where the link operation mode switching information indicates to the other device (i.e., the second device) among the AP multi-link device and the non-AP multi-link device to perform the link operation mode switching of the first link.

Step 602: the link operation mode of the first link between the first device and the second device is switched according to the link operation mode switching information.

In some embodiments, after the first device sends the link operation mode switching information to indicate to the second device to switch the link operation mode of the first link, the first device also performs locally the step of switching the link operation mode of the first link between the first device and the second device.

For example, assumes that an AP multi-link device has three affiliated APs, namely an affiliated AP corresponding to the 6GHz band, an affiliated AP corresponding to the 5GHz band, and an affiliated AP corresponding to the 2.4GHz band, and correspondingly, a non-AP multi-link device includes three affiliated STAs, namely an affiliated STA corresponding to the 6GHz band, an affiliated STA corresponding to the 5GHz band, and an affiliated STA corresponding to the 2.4GHz band. Taking the first link as the 6GHz link as an example, the AP multi-link device may establish, through the affiliated AP corresponding to the 6GHz band, a 6GHz link with the affiliated STA corresponding to the 6GHz band in the non-AP multi-link device. Further, the AP multi-link device may also establish other links with the non-AP multi-link device through one or both of the other two affiliated APs, for example, establish a 5GHz link with the non-AP multi-link device, or establish a 2.4GHz link with the non-AP multi-link device, or establish both 5GHz and 2.4GHz links with the non-AP multi-link device.

During controlling the link operation mode switching of the first link, if one multi-link device among the AP multi-link device and the non-AP multi-link device needs to switch the link operation mode of the 6GHz link therebetween, the multi-link device may send the link operation mode switching information to the other multi-link device among the AP multi-link device and the non-AP multi-link device. The link operation mode switching information may indicate to the other multi-link device the need to switch the link operation mode of the 6GHz link. Also, the multi-link device locally switches the link operation mode of the 6GHz link according to the link operation mode switching information.

In summary, according to the solution illustrated in the embodiments of the present disclosure, in the case that multiple link operation modes are configured for the links established by the multi-link devices and at least two links have been established between two multi-link devices, one multi-link device can send the link operation mode switching information to the other multi-link device to switch the link operation mode of the first link among the at least two links, thereby enhancing flexibility of link management between multi-link devices.

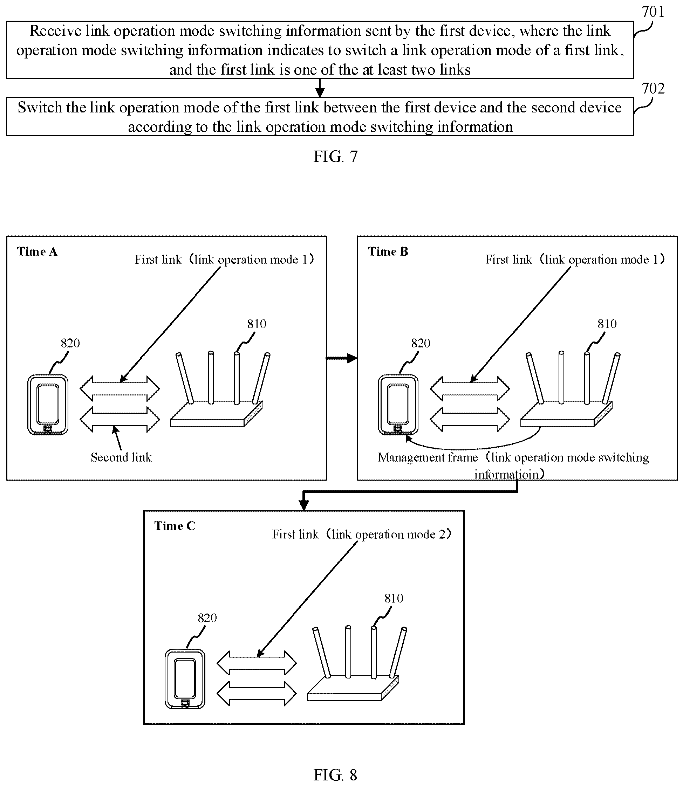

FIG. 7 illustrates a flowchart of a method for link operation mode switching according to an embodiment of the present disclosure. The method can be executed by a second device, where at least two links have been established between a first device and the second device. The first device and the second device are multi-link devices. For example, the first device and the second device may be the station 10 and the access point 20 in the network architecture illustrated in FIG. 1, respectively. The method may include the following steps.

Step 701: link operation mode switching information sent by the first device is received. The link operation mode switching information indicates to switch a link operation mode of a first link. The first link is one of the at least two links.

Step 702: the link operation mode of the first link between the first device and the second device is switched according to the link operation mode switching information.

In summary, according to the solution illustrated in the embodiments of the present disclosure, in the case that multiple link operation modes are configured for the links established by the multi-link devices and at least two links have been established between two multi-link devices, one multi-link device can switch the link operation mode of the first link among the at least two links after receiving the link operation mode switching information sent by the other multi-link device, thereby enhancing flexibility of link management between multi-link devices.

Based on the embodiments illustrated in FIGS. 6 and 7, please refer to FIG. 8, which is a schematic diagram illustrating link operation mode switching involved in the embodiments of the present disclosure.

As illustrated in FIG. 8, at time A, two links, namely a first link and a second link, have been established between an AP multi-link device 810 and a non-AP multi-link device 820. The first link operates in link operation mode 1.

At time B, the AP multi-link device 810 needs to switch the link operation mode of the first link. At this time, the AP multi-link device 810 sends an aperiodically-transmitted Management frame containing link operation mode switching information, where the link operation mode switching information indicates to the non-AP multi-link device 820 to switch the link operation mode of the first link. The non-AP multi-link device 820 can receive this Management frame.

At time C, the AP multi-link device 810 switches the link operation mode of the first link according to the link operation mode switching information (e.g., switch to link operation mode 2). The non-AP multi-link device 820 also switches the link operation mode of the first link to link operation mode 2 according to the link operation mode switching information.

In view of the problems of millimeter-wave communication, such as significant signal attenuation, susceptibility to blockage, short coverage distance, and high power consumption of millimeter-wave communication devices, the above embodiments of the present disclosure proposes the operation-mode managing method for the non-access point multi-link device (non-AP MLD) based on millimeter-wave links, in which the non-AP MLD device can initiate switching between an independent operation mode and a controlled operation mode. This method not only meets the communication needs of the device but also reduces power consumption and improves transmission efficiency. In addition to enhancing millimeter-wave link management based on multi-link operations, the operation-mode managing method for the non-AP MLD based on millimeter-wave links proposed in the above embodiments of the present disclosure can also be extended to enhance low-frequency link management based on multi-link operations.

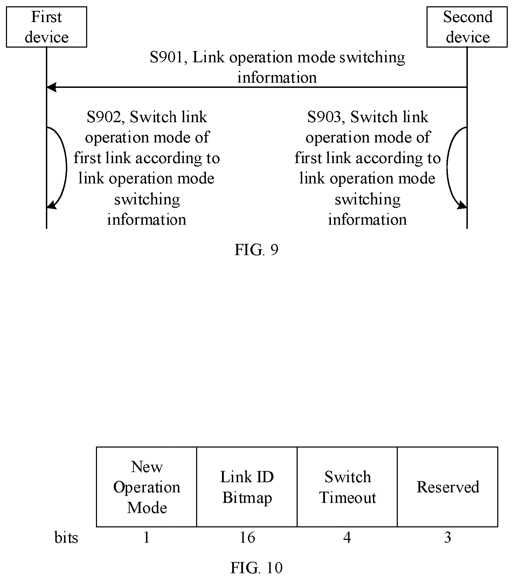

Based on the embodiments illustrated in FIGS. 6 and 7, please refer to FIG. 9, which illustrates a flowchart of a method for link operation mode switching according to an embodiment of the present disclosure. The method can be interactively executed by a first device and a second device, where at least two links have been established between the first device and the second device. The first device and the second device are multi-link devices. For example, the first device and the second device can be the station 10 and the access point 20 in the network architecture illustrated in FIG. 1, respectively. The method may include the following steps.

Step 901: The first device sends link operation mode switching information to the second device, and the second device receives the link operation mode switching information.

The link operation mode switching information is used to indicate to switch a link operation mode of a first link. The first link is one of the at least two links.

In some embodiments, the link operation mode includes an MLO-based controlled operation mode and an MLO-based independent operation mode.

The MLO-based controlled operation mode refers to a mode in which data transmission of the corresponding link in MLO of the established links is managed and controlled by another link.

The MLO-based independent operation mode refers to a mode in which data transmission of the corresponding link in MLO of the established links is managed and controlled by the corresponding link.

In some embodiments, the link operation mode includes the MLO-based controlled operation mode and the MLO-based independent operation mode.

The MLO-based controlled operation mode refers to a mode in which, in MLO of the established links, data transmission of the corresponding link is managed and controlled by another link. The MLO-based controlled operation mode may also be referred to as an MLO-based management and control link mandatory-enabled operation mode. That is, in this mode, the management and control link operates in a mandatory-enabled operation mode.

The MLO-based independent operation mode refers to a mode in which, in MLO of the established links, the data transmission of the corresponding link is managed and controlled by the link itself. The MLO-based independent operation mode may also be referred to as an MLO-based management and control link optional-enabled operation mode. That is, in this mode, the management and control link operates in an optional-enabled operation mode, i.e. the management and control link may be in a disabled state or a power save state.

The MLO-based independent operation mode may also be referred to as a semi-independent operation mode. The so-called semi-independent operation mode means that the link can only operate in MLO, that is, the setup of the link depends on multi-link (including this link) setup on other links, and/or, the link can only operate as one of at least two established links when the at least two links have been established.

In some embodiments, among the at least two links, the link in the MLO-based independent operation mode is used to transmit at least one of the following Management frames: a Beacon frame, an individually addressed Class 3 Management frame, an individually addressed Deauthentication frame, an individually addressed Disassociation frame, or an individually addressed Multi-link Probe Request.

In some embodiments, among the at least two links, the link in the MLO-based controlled operation mode is not used to transmit at least one of the following Management frames: a Beacon frame, an individually addressed Class 3 Management frame, an individually addressed Deauthentication frame, an individually addressed Disassociation frame, or an individually addressed Multi-link Probe Request.

In some embodiments, two operation modes are defined for a link: the MLO-based independent operation mode (i.e., MLO-based management and control link optional-enabled operation mode, also referred to as the independent operation mode), and the MLO-based controlled operation mode (i.e., MLO-based management and control link mandatory-enabled operation mode, also referred to as the controlled operation mode).

For an AP multi-link device, one or more links established between one affiliated AP/affiliated PCP and one or more other non-AP link devices can form a Basic Service Set (BSS). In this case, the operation mode of the links established by one affiliated AP/affiliated PCP in the AP multi-link device can be referred to as the independent operation mode of one BSS or the controlled operation mode of one BSS.

The independent operation mode of one BSS or link refers to the ability of the BSS or link to independently manage and control the BSS or link itself and perform data communication. This mainly includes periodic transmission of a Beacon frame or Probe Response frame by the corresponding AP in the BSS or link, and the exchange of a specific Management frame (such as Class 3 Management frame, Deauthentication frame, and Disassociation frame) in the BSS or link.

The controlled operation mode of one BSS or link refers to that the BSS or link is managed and controlled by another BSS or link (referred to as the management and control BSS or link). This mainly includes that in the BSS or link, the corresponding AP does not periodically transmit a Beacon frame or a Probe Response frame, a specific Management frame (such as Class 3 Management frame, Deauthentication frame, and Disassociation frame) cannot be exchanged, and communication in the BSS or link is managed and controlled by the management and control BSS or link.

In some embodiments, the first device sends the link operation mode switching information to the second device as follows.

When the first link is in the MLO-based controlled operation mode, the first link sends the link operation mode switching information to the second device through the second link. The second link is a link that manages and controls the first link.

In some embodiments, the second device receives the link operation mode switching information sent by the first device as follows.

When the first link is in the MLO-based controlled operation mode, the second device receives the link operation mode switching information sent by the first device through the second link. The second link is the link that manages and controls the first link.

When the first link between the first device and the second device operates in the MLO-based controlled operation mode, no Management frame is transmitted on the first link between the first device and the second device. In this case, the first device may send a Management frame carrying the link operation mode switching information through the second link that manages and controls the first link.

In some embodiments, the first device sends the link operation mode switching information to the second device as follows.

When the first link is in the MLO-based independent operation mode, the first device sends the link operation mode switching information to the second device through the first link.

In some embodiments, the second device receives the link operation mode switching information sent by the first device as follows.

When the first link is in the MLO-based independent operation mode, the second device receives the link operation mode switching information sent by the first device through the first link.

When the first link between the first device and the second device operates in the MLO-based independent operation mode, Management frames are inherently transmitted on the first link between the first device and the second device. In this case, the first device may send a Management frame carrying the link operation mode switching information through the first link.

In some embodiments, when the first device is a non-AP multi-link device, the second device sends a unicast Management frame to the first device, and correspondingly, the first device may receive the unicast Management frame sent by the second device. The unicast Management frame contains at least one of functions, capabilities, or operation parameter information of links that have been established between the first device and the second device.

In some embodiments, when the first device is a non-AP multi-link device, the second device sends the unicast Management frame to the first device as follows. The second device sends the unicast Management frame to the first device through a link that is in the MLO-based independent operation mode among the at least two links. Correspondingly, the first device receives the unicast Management frame sent by the second device includes as follows. The first device receives the unicast Management frame sent by the second device through a link that is in the MLO-based independent operation mode among the at least two links.

In some embodiments, when the first device is an AP multi-link device, the first device sends a unicast Management frame to the second device, and correspondingly, the second device may receive the unicast Management frame sent by the first device. The unicast Management frame includes at least one of functions, capabilities, or operation parameter information of links that have been established between the first device and the second device.

In some embodiments, when the first device is an AP multi-link device, the first device sends a unicast Management frame to the second device as follows. The first device sends a unicast Management frame to the second device through a link that is in the MLO-based independent operation mode among the at least two links. Correspondingly, the second device receives the unicast Management frame sent by the first device as follows. The second device receives the unicast Management frame sent by the first device through a link that is in the MLO-based independent operation mode among the at least two links.

When a non-AP MLD is associated with an AP MLD and has established multiple links with the AP MLD, one of the established links of the non-AP MLD may operate in either the independent operation mode or the controlled operation mode. For example, the non-AP MLD and the AP MLD have established a low-frequency (e.g., sub-7GHz) link and a high-frequency link (e.g., millimeter-wave link). The millimeter-wave link may operate in either the independent operation mode or the controlled operation mode. When the millimeter-wave link operates in the controlled operation mode, the low-frequency link serves as the management and control link to manage communication on the millimeter-wave link. When the millimeter-wave link operates in the independent operation mode, the millimeter-wave link can manage and control communication on its own. If the AP MLD supports the non-AP MLD in switching the operation mode of the corresponding link, the non-AP MLD may initiate a switch between the controlled and independent operation modes, thereby switching the operation mode of the corresponding link of the non-AP MLD itself.
1. When an established link of the non-AP MLD that can operate in either the independent operation mode or the controlled operation mode operates in the independent operation mode, the features and behaviors of management frame transmission and reception on this link are as follows:
   (1) The AP MLD may periodically send an individually addressed Management frame, such as Unsolicited Probe Response, to the non-AP MLD on this link, where the Management frame carries functions, capabilities, and operation parameter information related to the established links of the non-AP MLD.
   (2) The AP MLD may send an individually addressed Class 3 Management frame, destined for the non-AP MLD or one or more affiliated STAs of the non-AP MLD, to the non-AP MLD on this link, while following relevant rules for frame transmission on enabled and disabled links in link management, as well as rules for individually addressed Management frame transmission for multi-link devices.
   (3) The AP MLD may send individually addressed Deauthentication frame and Disassociation frame to the non-AP MLD on this link, while following the relevant rules for frame transmission on enabled and disabled links in link management.
   (4) The non-AP MLD may send an individually addressed Class 3 Management frame, destined for the AP MLD or one or more affiliated APs of the AP MLD, to the AP MLD on this link, while following the relevant rules for frame transmission on enabled and disabled links in link management, as well as the rules for individually addressed management frame transmission for multi-link devices.
   (5) The non-AP MLD may send an individually addressed Multi-link Probe Request, Deauthentication frame, and Disassociation frame to the AP MLD on this link, while following the relevant rules for frame transmission on enabled and disabled links in link management.
2. When an established link of the non-AP MLD that can operate in either the independent operation mode or the controlled operation mode operates in the controlled operation mode, the features and behaviors of management frame transmission and reception on this link are as follows:
   (1) The AP MLD does not periodically send to the non-AP MLD on this link the Management frame that carries functions, capabilities, and operation parameter information related to the established links of the non-AP MLD.
   (2) The AP MLD does not send the individually addressed Class 3 Management frame, destined for the non-AP MLD or one or more affiliated STAs of the non-AP MLD, to the non-AP MLD on this link.
   (3) The AP MLD does not send the individually addressed Deauthentication frame and Disassociation frame to the non-AP MLD on this link.
   (4) The non-AP MLD does not send the individually addressed Class 3 Management frame, destined for the AP MLD or one or more affiliated APs of the AP MLD, to the AP MLD on this link.
   (5) The non-AP MLD does not send the individually addressed Multi-link Probe Request, Deauthentication frame, and Disassociation frame to the AP MLD on this link.

When the link operates in the controlled operation mode, another established link between the non-AP MLD and the AP MLD, namely the management and control link of this link, is responsible for transmission and reception of the above-mentioned related Management frames.

In some embodiments, the link operation mode switching information is used to indicate at least one of the following information: a target link operation mode for the first link to switch to, an identifier (ID) of the first link, and a timeout duration for the link operation mode switching of the first link.

In some embodiments, the link operation mode switching information includes an operation mode switch control field. The operation mode switch control field includes at least one of the following information fields: a new operation mode subfield, a link ID bitmap subfield, and a switch timeout subfield.

The new operation mode subfield indicates the target link operation mode for the first link to switch to.

The link ID bitmap subfield indicates the ID of the first link to be switched.

The switch timeout subfield indicates the timeout duration for the link operation mode switching of the first link.

In some embodiments, the switch timeout subfield contains a switch timeout code, where the switch timeout code indicates the number of time units corresponding to the timeout duration for switching of the first link.

In some embodiments, the Management frame carrying the link operation mode switching indication information may also be referred to as a Controlled and Independent Operation Mode Switch Notification frame. This frame is used to indicate, to the non-AP MLD with which the station transmitting the frame is affiliated or the non-AP MLD with which the target receiving station of the frame is affiliated, to change an operation mode of a link specified by the frame, that is, switching the specified link from the controlled operation mode to the independent operation mode, or from the independent operation mode to the controlled operation mode. The frame mainly includes a New Operation Mode subfield, a link ID Bitmap subfield, and a Switch Timeout subfield.

For example, information contained in the Controlled and Independent Operation Mode Switch Notification frame is illustrated in Table 1.

**Table 1**

| Order | Information |
|---|---|
| 1 | Category |
| 2 | Protected Action |
| 3 | Dialog Token |
| 4 | Controlled and Independent Operation Mode Switch Control Field |

The Category field may follow the relevant definition of the Action field in the IEEE 802.11 specification.

The Protected Action field may follow the relevant definition of the Protected Action field in the IEEE 802.11 specification.

The Dialog Token field is set to a selected non-zero value by the non-AP MLD, and is also set by the AP MLD to a corresponding value copied from the received Controlled and Independent Operation Mode Switch Notification frame.

FIG. 10 illustrates a diagram of format definition of the Controlled and Independent Operation Mode Switch Control field involved in the embodiments of the present disclosure. As illustrated in FIG. 10, the Controlled and Independent Operation Mode Switch Control field includes the following content:
(1) New Operation Mode subfield, which indicates an operation mode to switch to. When the value of the New Operation Mode subfield is 0, it indicates to switch to the controlled operation mode. When the value of the New Operation Mode subfield is 1, it indicates to switch to the independent operation mode.
(2) Link ID Bitmap field, which indicates an ID of the link for which the controlled and independent operation mode switch is to be performed. In the link ID Bitmap field, a value of 1 at bit position *i* indicates that a link with link ID *i* is the link for which the controlled and independent operation mode switch is to be performed. A value of 0 at bit position *j* indicates that a link with link ID *j* is not the link for which the controlled and independent operation mode switch is to be performed.
(3) Switch Timeout subfield, which indicates a timeout value for the exchange of the Controlled and Independent Operation Mode Switch Notification frame.

In some embodiments, encoding of the Switch Timeout subfield may be as illustrated in Table 2 below.

**Table 2**

| Switch Timeout subfield | Transition timeout |
|---|---|
| 0 | 0 TUs |
| 1 | 128 µs |
| 2 | 256 µs |
| 3 | 512 µs |
| 4 | 1 TU |
| 5 | 2 TUs |
| 6 | 4 TUs |
| 7 | 8 TUs |
| 8 | 16 TUs |
| 9 | 32 TUs |
| 10 | 64 TUs |
| 11 | 128 TUs |
| 12-15 | Reserved |

Step 902: The first device switches the link operation mode of the first link between the first device and the second device according to the link operation mode switching information.

In some embodiments, when the link operation mode switching information indicates the timeout duration for the link operation mode switching of the first link and the time elapsed since the link operation mode switching information was received has not reached the timeout duration, the first device may return the link operation mode switching information to the second device.

The first device may return the link operation mode switching information to the second device.

In some embodiments, the first device switches the link operation mode of the first link between the first device and the second device according to the link operation mode switching information as follows.

When the link operation mode switching information indicates the timeout duration for the link operation mode switching of the first link and the time elapsed since the link operation mode switching information was sent reaches the timeout duration, if no link operation mode switching information returned by the second device has been received, the first device switches the link operation mode of the first link between the first device and the second device according to the link operation mode switching information.

In some embodiments, the first device switches the link operation mode of the first link between the first device and the second device according to the link operation mode switching information as follows.

When the link operation mode switching information indicates the timeout duration for the link operation mode switching of the first link and the time elapsed since the link operation mode switching information was sent has not reached the timeout duration, if the link operation mode switching information returned by the second device is received, the first device switches the link operation mode of the first link between the first device and the second device according to the link operation mode switching information.

In some embodiments, the first device switches the link operation mode of the first link between the first device and the second device according to the link operation mode switching information as follows.

When the link operation mode switching information returned by the second device is received, the first device switches the link operation mode of the first link between the first device and the second device according to the link operation mode switching information.

Step 903: The second device switches the link operation mode of the first link between the first device and the second device according to the link operation mode switching information.

In some embodiments, upon receiving the Management frame containing the link operation mode switching information sent by the first device, the second device may immediately switch the link operation mode of the first link between the first device and the second device according to the link operation mode switching information in the Management frame.

In some embodiments, the switching between controlled and independent operation modes (i.e., the switching of the link operation mode of the first link) may be initiated by the non-AP multi-link device or by the AP multi-link device.

In some embodiments, when the operation mode of the first link is the MLO-based controlled operation mode, the affiliated STA/ affiliated AP of the first device or the second device corresponding to the second link is in at least one of the following modes or states: active mode, periodic awake state in power save mode, and continuous awake state in power save mode. The second link is the link for managing and controlling the first link.

In some embodiments, when the operation mode of the first link is the MLO-based independent operation mode, the affiliated STA/ affiliated AP in the first device or the second device corresponding to the second link is in at least one of the following modes or states: active mode, periodic awake state in power save mode, continuous awake state in power save mode, and continuous doze state in power save mode. The second link is the link for managing and controlling the first link.

The link operation mode may be associated with the power save mode/active mode of the link. For example, when an affiliated STA and/or affiliated AP of a link needs to save power to reduce consumption, the affiliated STA and/or affiliated AP may enter a continuous doze state in power save mode, and in this case the link may switch to the MLO-based controlled operation mode, where Beacon frames and specific Management frames are not transmitted. When a link needs to prioritize transmission performance or take on management tasks for other links, the affiliated STA and/or affiliated AP corresponding to the link may enter a continuous awake state or periodic awake state in active mode, and in this case the link may switch to the MLO-based independent operation mode to transmit Beacon frames, Probe Response frames, and other specific Management frames.

In some embodiments, the at least two links include at least one link that operates in the millimeter-wave (mmWave) band.

The solutions illustrated in the above embodiments of the present disclosure can address the problems of high signal attenuation, susceptibility to blockage, short coverage distance, and high power consumption of millimeter-wave communication devices in millimeter-wave communication.

I. Method for controlled and independent operation mode switching initiated by a non-AP multi-link device:
When a non-AP MLD is ready to perform controlled and independent operation mode switching on a link that supports switching between controlled and independent operation modes, an STA affiliated with the non-AP MLD sends a Controlled and Independent Operation Mode Switch Notification frame to an AP affiliated with the AP MLD. In this frame, when a value of a New Operation Mode subfield is set to 0, it indicates that an operation mode of a relevant link will be switched to the controlled operation mode. When the value of the New Operation Mode subfield is set to 1, it indicates that the operation mode of the relevant link will be switched to the independent operation mode. Upon receiving the Controlled and Independent Operation Mode Switch Notification frame sent by the STA affiliated with the non-AP MLD, the AP affiliated with the AP MLD sends to the STA affiliated with the non-AP MLD, within a timeout interval indicated by a Switch Timeout subfield in the received Controlled and Independent Operation Mode Switch Notification frame, a Controlled and Independent Operation Mode Switch Notification frame with a Controlled and Independent Operation Mode Switch Control field set to the same value as the received Controlled and Independent Operation Mode Switch Control Field. When a switch timeout duration indicated by the Switch Timeout subfield has elapsed since the non-AP MLD successfully sent the Controlled and Independent Operation Mode Switch Notification frame, or the non-AP MLD receives the Controlled and Independent Operation Mode Switch Notification frame from the AP affiliated with the AP MLD, the relevant link indicated by the link ID Bitmap field in the frame will then operate in an operation mode indicated by the New Operation Mode subfield. That is, when the value of the New Operation Mode subfield is set to 0, the operation mode of the relevant link will be switched to the controlled operation mode, and when the value of the New Operation Mode subfield is set to 1, the operation mode of the relevant link will be switched to the independent operation mode.

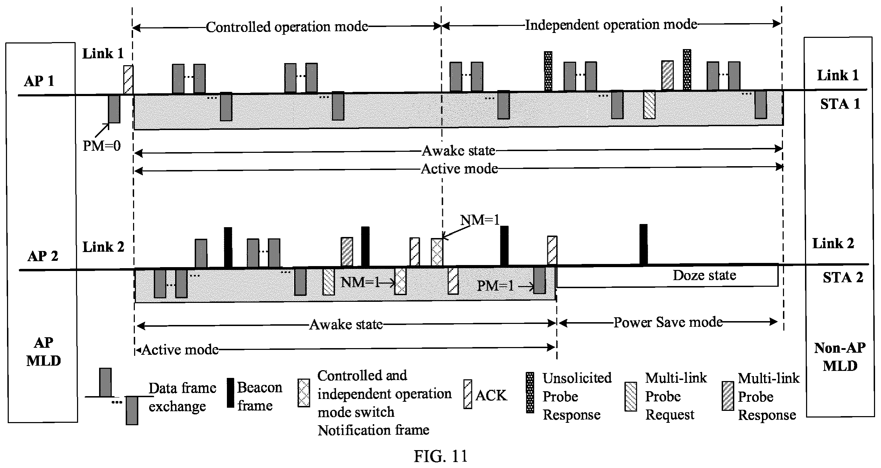

FIG. 11 illustrates a schematic diagram of a method for switching initiated by a non-AP multi-link device according to an embodiment of the present disclosure. As illustrated in FIG. 11, an example is described, where a link of a non-AP MLD is switched from a controlled operation mode to an independent operation mode. A non-AP MLD is associated with an AP MLD and has established two links with the AP MLD, namely Link1 and Link2. Link1 is a high-frequency link, such as a millimeter-wave link (i.e., operating in the millimeter-wave band), which can operate in either the independent operation mode or the controlled operation mode. Link2 is the management and control link, which can be a low-frequency link (i.e., operating in a band below 7GHz) and can manage and control communication on Link1.

Initially, Link1 of the Non-AP MLD is in the controlled operation mode. That is, AP1 of the AP MLD does not send a Beacon frame, and the communication on Link1 is managed and controlled by Link2. Further, STA1 of the Non-AP MLD cannot send a Probe Request frame on Link1 to obtain information about the AP of the AP MLD. On Link2, by carrying information related to Link1 in a transmitted Beacon frame or Probe Response frame, AP2 notifies the non-AP MLD device that can receive the Beacon frame or Probe Response frame of information about Link1 or the AP corresponding to Link1 (i.e., the reported AP). For the non-AP MLD, when Link1 is in the controlled operation mode, STA2 on Link2 operates in a awake state in an active mode to ensure that the STA2 can obtain management information of Link2 while also promptly obtaining management information of Link1.

After a period of time, STA2 of the non-AP MLD sends a Controlled and Independent Operation Mode Switch Notification frame through Link2, to notify the AP MLD that the operation mode of Link1 will be switched at the non-AP MLD. The New Operation Mode (NM in the figure) subfield carried in the Controlled and Independent Operation Mode Switch Notification frame is set to 1, and the link ID Bitmap field indicates that Link1 is the link to switch between controlled and independent operation modes, thereby indicating that Link1 will switch to the independent operation mode.

After STA2 of the Non-AP MLD receives on Link2 the corresponding Controlled and Independent Operation Mode Switch Notification frame sent by the AP MLD (note: the Controlled and Independent Operation Mode Switch Control field is set to the same value as the received Controlled and Independent Operation Mode Switch Control field), the operation mode of Link1 is switched to the independent operation mode.

After the operation mode of Link1 is switched to the independent operation mode at the non-AP MLD, the AP MLD may periodically send Unsolicited Probe Responses to the non-AP MLD on Link1, carrying information related to functions, capabilities, and operation parameters of the established links (Link1 and Link2) of the non-AP MLD. Further, STA1 of the non-AP MLD may also send Multi-link Probe Request to the AP MLD on Link1 to obtain complete profile or requested information about AP1 and/or AP2 of the AP MLD. Meanwhile, the non-AP MLD switches STA2 on Link2 from an active mode to a doze state in power save mode, to achieve power saving for STA2 while maintaining communication with the AP MLD on Link1.

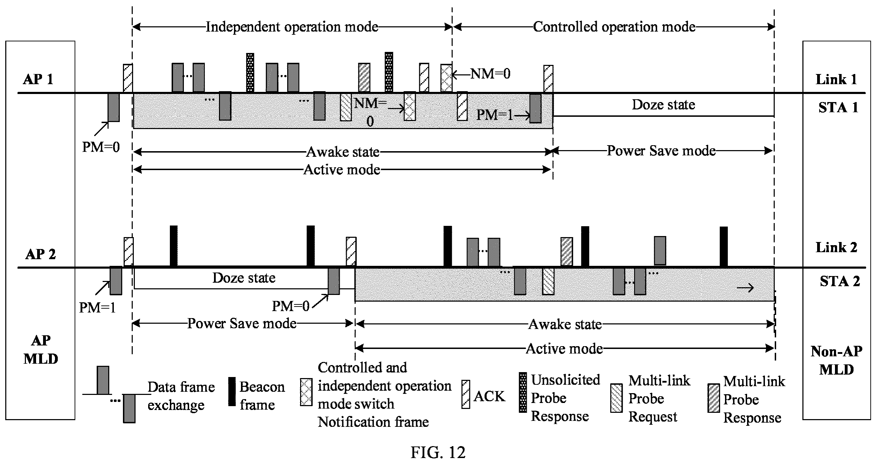

FIG. 12 illustrates a schematic diagram of a method for switching initiated by a non-AP multi-link device according to an embodiment of the present disclosure. As illustrated in FIG. 12, an example is described, where a link of a non-AP MLD switches from the independent operation mode to the controlled operation mode. A non-AP MLD is associated with an AP MLD and has established two links with the AP MLD, namely Link1 and Link2. Link1 is a high-frequency link, such as a millimeter-wave link (i.e., operating in a millimeter-wave band), which can operate in either the independent operation mode or the controlled operation mode. Link2 is the management and control link, which can be a low-frequency link (i.e., operating in a band below 7GHz) and can manage and control communication on Link1.

Initially, Link1 of the non-AP MLD is in the independent operation mode. That is, the AP MLD may periodically send Unsolicited Probe Responses to the non-AP MLD on Link1, carrying information related to functions, capabilities, and operation parameters of the established links (Link1 and Link2) of the non-AP MLD. Further, STA1 of the non-AP MLD may also send Multi-link Probe Request to the AP MLD on Link1 to obtain complete profile or requested information about AP1 and/or AP2 of the AP MLD. Meanwhile, STA2 on Link2 of the non-AP MLD is in a doze state in power save mode to meet the power-saving requirements.

After a period of time, STA1 of the Non-AP MLD sends a Controlled and Independent Operation Mode Switch Notification frame via Link1 to notify the AP MLD that the operation mode of Link1 of the non-AP MLD will be switched. The New Operation Mode (that is, NM in the figure) subfield carried in the Controlled and Independent Operation Mode Switch Notification frame is set to 0, and the link ID Bitmap field indicates that Link1 is the link to switch between controlled and independent operation modes, thereby indicating that Link1 will be switched to the controlled operation mode.

After STA1 of the non-AP MLD receives on Link1 the corresponding Controlled and Independent Operation Mode Switch Notification frame sent by the AP MLD (note: a Controlled and Independent Operation Mode Switch Control field is set to the same value as the received Controlled and Independent Operation Mode Switch Control field), the operation mode of Link1 is switched to the controlled operation mode.

After Link1 of the non-AP MLD switches to the controlled operation mode, AP1 of the AP MLD no longer periodically sends Unsolicited Probe Responses to the non-AP MLD on Link1. At the same time, STA1 of the non-AP MLD cannot send Probe Request frames on Link1 to obtain information about APs of the AP MLD.

Before Link1 of the non-AP MLD switches to the controlled operation mode, STA2 on Link2 of the non-AP MLD switches from the power save mode to the active mode. This allows STA2 to receive Beacon frames sent by AP2 on Link2 to obtain information about the functions, capabilities, and operation parameters of Link1 and Link2 after Link1 of the non-AP MLD switches to the controlled operation mode. At the same time, STA2 of the non-AP MLD may also send Multi-link Probe Request frames to the AP MLD on Link2 to obtain complete profile or requested information about AP1 and/or AP2 of the AP MLD.

II. Method for controlled and independent operation mode switching initiated by an AP multi-link device is as follows.

When an access point multi-link device (AP MLD) is ready to perform, for a target non-AP MLD associated with the AP MLD, controlled and independent operation mode switch on a link that supports switching between controlled and independent operation modes, an affiliated AP of the AP MLD that corresponds to one of the established links with the target non-AP MLD sends a Controlled and Independent Operation Mode Switch Notification frame to an affiliated non-AP STA of the non-AP MLD, where this frame indicates that controlled and independent mode switching is to be performed on a relevant link of the target non-AP MLD. If a value of a New Operation Mode subfield in the Controlled and Independent Operation Mode Switch Notification frame is set to 0, it indicates that the operation mode of the relevant link of the target non-AP MLD will be switched to the controlled operation mode. If the value of the New Operation Mode subfield is set to 1, it indicates that the operation mode of the relevant link of the target non-AP MLD will be switched to the independent operation mode. After receiving the Controlled and Independent Operation Mode Switch Notification frame sent by an affiliated AP of the AP MLD, an affiliated non-AP STA of the target non-AP MLD sends a Controlled and Independent Operation Mode Switch Notification frame, with a Controlled and Independent Operation Mode Switch Control field set to the same value as the received Controlled and Independent Operation Mode Switch Control field, to the affiliated AP of the target AP MLD within a timeout interval indicated by a Switch Timeout subfield of the received Controlled and Independent Operation Mode Switch Notification frame. When a switch timeout duration indicated by the Switch Timeout subfield has elapsed since the target non-AP MLD successfully received the Controlled and Independent Operation Mode Switch Notification frame, or after the target non-AP MLD successfully sends the Controlled and Independent Operation Mode Switch Notification frame to the affiliated AP of the AP MLD, the relevant link indicated by the link ID Bitmap field in the frame to perform mode switching will then operate in the operation mode indicated by the New Operation Mode subfield. That is, when a value of the New Operation Mode subfield is set to 0, the operation mode of the relevant link will be switched to the controlled operation mode; when the value of the New Operation Mode subfield is set to 1, the operation mode of the relevant link will be switched to the independent operation mode.

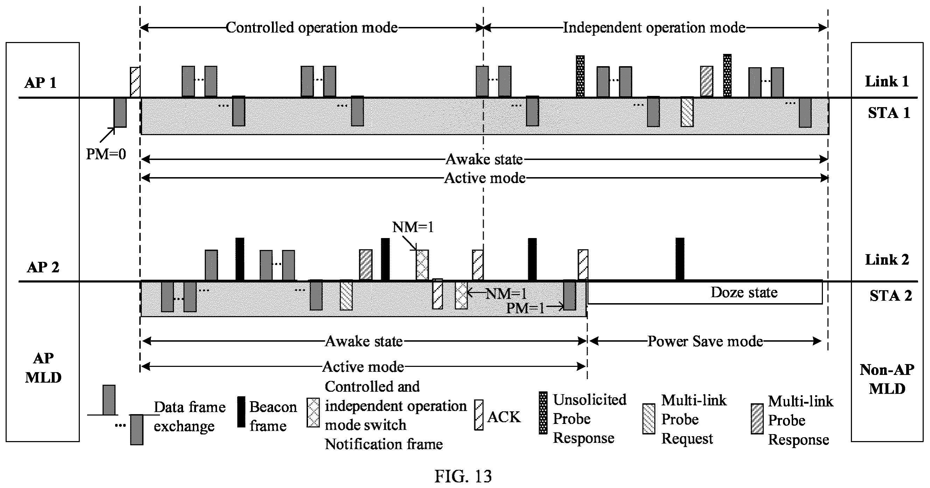

FIG. 13 illustrates a schematic diagram of a method for switching initiated by an AP multi-link device according to an embodiment of the present disclosure. As illustrated in FIG. 13, an example is described where an AP MLD initiates switching a link of a non-AP MLD from the controlled operation mode to the independent operation mode. The non-AP MLD is associated with the AP MLD and has established two links with the AP MLD, namely Link1 and Link2. Link1 is a high-frequency link, such as a millimeter-wave link (i.e., operating in a millimeter-wave band), which can operate in either the independent operation mode or the controlled operation mode. Link2 is the management and control link, which can be a low-frequency link (i.e., operating in a band below 7GHz) and can manage and control communication on Link1.

Initially, Link1 of the non-AP MLD is in the controlled operation mode. That is, AP1 of the AP MLD does not send Beacon frames, and communication on Link1 is managed and controlled by Link2. Further, STA1 of the non-AP MLD cannot send Probe Request frames on Link1 to obtain information about APs of the AP MLD. On Link2, AP2 carries information related to Link1 in a transmitted Beacon frame or Probe Response frame to notify the non-AP MLD device that can receive this Beacon frame or Probe Response frame of information about Link1 or an AP corresponding to Link1 (i.e., a reported AP). For the non-AP MLD, when Link1 is in the controlled operation mode, STA2 on Link2 operates in an awake state under an active mode to ensure that STA2 can obtain management information for Link2 while also promptly obtaining management information for Link1.

After a period of time, AP2 of the AP MLD sends a Controlled and Independent Operation Mode Switch Notification frame via Link2 to notify the non-AP MLD (i.e., the target non-AP MLD) that an operation mode of Link1 of the non-AP MLD will be switched. The New Operation Mode (that is, NM in the figure) subfield carried in the Controlled and Independent Operation Mode Switch Notification frame is set to 1, and the link ID Bitmap field indicates that Link1 is the link to switch between controlled and independent operation modes, thereby indicating that Link1 will be switched to the independent operation mode.

After STA2 of the non-AP MLD receives on Link2 the Controlled and Independent Operation Mode Switch Notification frame sent by the AP MLD and responds with an acknowledgment frame (ACK), if the non-AP MLD is ready to switch the operation mode of Link1 to the independent operation mode, the non-AP MLD sends the corresponding Controlled and Independent Operation Mode Switch Notification frame (note: a Controlled and Independent Operation Mode Switch Control field is set to the same value as the received Controlled and Independent Operation Mode Switch Control field) to AP2 of the AP MLD and receives the ACK sent by the AP MLD. Then, the operation mode of Link1 of the non-AP MLD is switched to the independent operation mode.

After the operation mode of Link1 of the non-AP MLD is switched to the independent operation mode, the AP MLD may periodically send Unsolicited Probe Responses to the non-AP MLD on Link1, carrying information related to the functions, capabilities, and operation parameters of the established links (Link1 and Link2) of the non-AP MLD. Further, STA1 of the non-AP MLD may also send Multi-link Probe Request frames to the AP MLD on Link1 to obtain complete profile or requested information about AP1 and/or AP2 on the AP MLD. Meanwhile, the non-AP MLD switches STA2 from the active mode to a doze state in power save mode on Link2 to achieve power saving for STA2 while maintaining communication with the AP MLD on Link1.

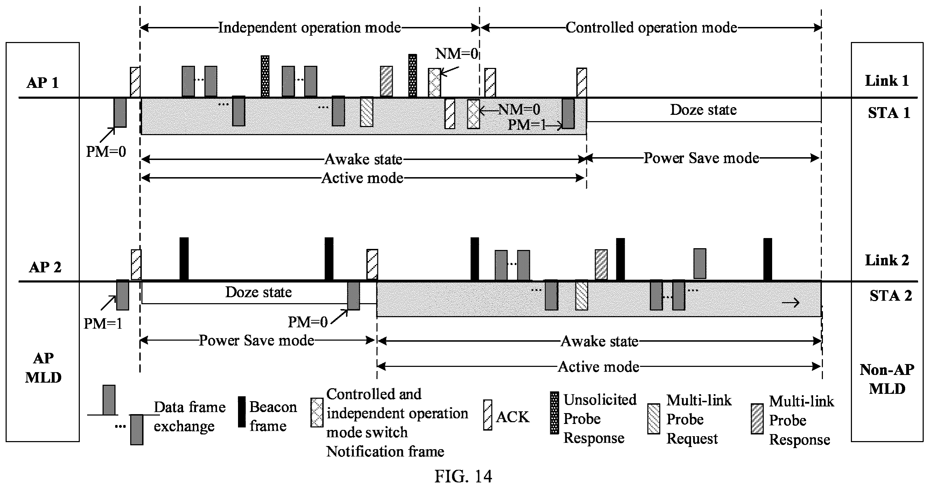

FIG. 14 illustrates a schematic diagram of a method for switching initiated by an AP multi-link device according to an embodiment of the present disclosure. As illustrated in FIG. 14, an example is described in which a link of a non-AP MLD is switched from the independent operation mode to the controlled operation mode. The non-AP MLD is associated with an AP MLD and has established two links with the AP MLD, namely Link1 and Link2. Link1 is a high-frequency link, such as a millimeter-wave link (i.e., operating in a millimeter-wave band), which can operate in either the independent operation mode or the controlled operation mode. Link2 is the management and control link, which can be a low-frequency link (i.e., operating in a band below 7GHz) and can manage and control the communication on Link1.

Initially, Link1 of the non-AP MLD is in the independent operation mode. That is, the AP MLD may periodically send Unsolicited Probe Responses to the non-AP MLD on Link1, carrying information related to the functions, capabilities, and operation parameters of the established links (Link1 and Link2) of the non-AP MLD. Further, STA1 of the non-AP MLD may also send Multi-link Probe Request frames to the AP MLD on Link1 to obtain complete profile or requested information about AP1 and/or AP2 on the AP MLD. Meanwhile, STA2 on Link2 of the non-AP MLD is in a doze state in power save mode to meet the power-saving requirements.

After a period of time, AP1 of the AP MLD sends a Controlled and Independent Operation Mode Switch Notification frame via Link1 to notify the non-AP MLD (i.e., the target non-AP MLD) that the operation mode of Link1 of the non-AP MLD will be switched. The New Operation Mode (NM in the figure) subfield carried in the Controlled and Independent Operation Mode Switch Notification frame is set to 0, and the link ID Bitmap field indicates that Link1 is the link to switch between controlled and independent operation modes, thereby indicating that Link1 will switch to the controlled operation mode.

After STA1 on Link1 of the non-AP MLD receives the Controlled and Independent Operation Mode Switch Notification frame sent by the AP MLD and responds with an acknowledgment frame (ACK), if the non-AP MLD is ready to switch the operation mode of Link1 to the controlled operation mode, the non-AP MLD sends the corresponding Controlled and Independent Operation Mode Switch Notification frame (note: a Controlled and Independent Operation Mode Switch Control field is set to the same value as the received Controlled and Independent Operation Mode Switch Control field) to AP1 of the AP MLD and receives the ACK sent by the AP MLD. Then, the operation mode of Link1 of the non-AP MLD switches to the controlled operation mode.

After the operation mode of Link1 of the non-AP MLD is switched to the controlled operation mode, AP1 of the AP MLD no longer periodically sends Unsolicited Probe Responses to the non-AP MLD on Link1. At the same time, STA1 of the non-AP MLD cannot send Probe Request frames on Link1 to obtain information about APs on the AP MLD.

Before Link1 of the non-AP MLD switches to the controlled operation mode, STA2 on Link2 of the Non-AP MLD switches from the power save mode to the active mode. This allows STA2 to receive Beacon frames sent by AP2 on Link2 to obtain information about the functions, capabilities, and operation parameters of Link1 and Link2 after Link1 of the non-AP MLD switches to the controlled operation mode. At the same time, STA2 of the non-AP MLD may also send Multi-link Probe Request frames to the AP MLD on Link2 to obtain complete profile or requested information about AP1 and/or AP2 on the AP MLD.

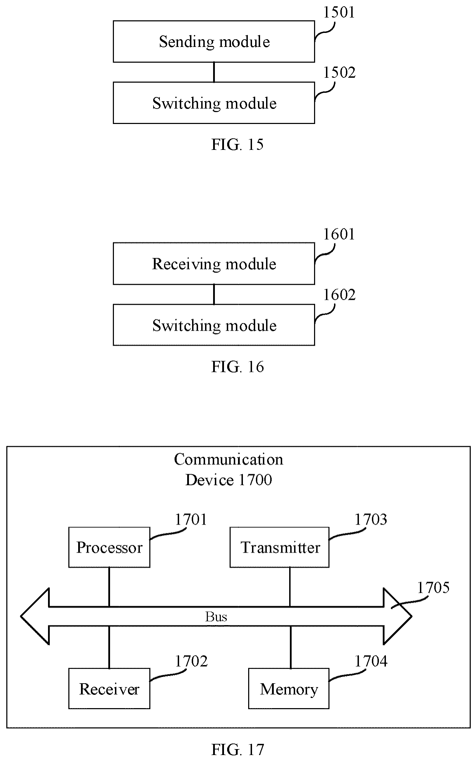

FIG. 15 illustrates a block diagram of an apparatus for link operation mode switching according to an embodiment of the present disclosure. The apparatus is capable of performing the steps executed by the first device in the above-mentioned method for link operation mode switching. As illustrated in FIG. 15, the apparatus may include a sending module 1501 and a switching module 1502.

The sending module 1501 is configured to send link operation mode switching information to a second device, where the link operation mode switching information indicates to switch a link operation mode of a first link. The first link is one of at least two links established between the first device and the second device. The first device and the second device are multi-link devices.

The switching module 1502 is configured to switch the link operation mode of the first link between the first device and the second device according to the link operation mode switching information.

In some embodiments, the link operation mode switching information is carried by a Management frame that is scheduled aperiodically.

In some embodiments, the link operation mode switching information is carried by an Action frame.

In some embodiments, the link operation mode includes an MLO-based controlled operation mode and an MLO-based independent operation mode.

The MLO-based controlled operation mode refers to a mode in which data transmission on a corresponding link in MLO of established links is managed and controlled by another link.

The MLO-based independent operation mode refers to a mode in which data transmission on a corresponding link in MLO of established links is managed and controlled by the corresponding link.

In some embodiments, the link operation mode switching information indicates at least one of: a target link operation mode for the first link to switch to, an ID of the first link, a timeout duration for link operation mode switching of the first link.

In some embodiments, the link operation mode switching information includes an operation mode switch control field, and the operation mode switching control filed includes at least one of following information fields: a new operation mode subfield, a link ID bitmap subfield, or a switch timeout subfield.

The new operation mode subfield indicates the target link operation mode for the first link to switch to.

The link ID bitmap subfield indicates the ID of the first link to be switched.

The switch timeout subfield indicates the timeout duration for link operation mode switching of the first link.

In some embodiments, the switch timeout subfield contains a switch timeout code, and the switch timeout code indicates a number of time units corresponding to the timeout duration for switching of the first link.

In some embodiments, the switching module 1502 is configured to: when the link operation mode switching information indicates the timeout duration for link operation mode switching of the first link and a time elapsed since the link operation mode switching information was sent reaches the timeout duration, if no link operation mode switching information returned by the second device has been received, switch the link operation mode of the first link between the first device and the second device according to the link operation mode switching information.

In some embodiments, the switching module 1502 is configured to: when the link operation mode switching information indicates the timeout duration for link operation mode switching of the first link and a time elapsed since the link operation mode switching information was sent has not reached the timeout duration, if the link operation mode switching information returned by the second device is received, switch the link operation mode of the first link between the first device and the second device according to the link operation mode switching information.

In some embodiments, the switching module 1502 is configured to switch, according to the link operation mode switching information, the link operation mode of the first link between the first device and the second device if the link operation mode switching information returned by the second device is received.

In some embodiments, the sending module 1501 is configured to send the link operation mode switching information to the second device through a second link when the first link is in the MLO-based controlled operation mode, where the second link is a link managing and controlling the first link.

In some embodiments, the sending module 1501 is configured to send the link operation mode switching information to the second device through the first link when the first link is in the MLO-based independent operation mode.

In some embodiments, the apparatus further comprises a receiving module. The receiving module is configured to, in the case that the first device is a non-AP multi-link device, receive a unicast Management frame sent by the second device, where the unicast Management frame contains at least one of functions, capabilities, or operation parameter information of links established between the first device and the second device.

In some embodiments, the receiving module is configured to receive the unicast Management frame sent by the second device through a link in the MLO-based independent operation mode among the at least two links.

In some embodiments, the sending module is further configured to, in the case that the first device is an AP multi-link device, send a unicast Management frame to the second device, where the unicast Management frame contains at least one of functions, capabilities, or operation parameter information of links established between the first device and the second device.

In some embodiments, the sending module is further configured to send the unicast Management frame to the second device through a link in the MLO-based independent operation mode among the at least two links.

In some embodiments, a link in the MLO-based independent operation mode among the at least two links is used for transmitting at least one of following Management frames: a Bacon frame, an individually addressed Class 3 Management frame, an individually addressed Deauthentication frame, an individually addressed Disassociation frame, or an individually addressed Multi-link Probe Request.

In some embodiments, a link in the MLO-based controlled operation mode among the at least two links is not used for transmitting at least one of following Management frames: a Bacon frame, an individually addressed Class 3 Management frame, an individually addressed Deauthentication frame, an individually addressed Disassociation frame, or an individually addressed Multi-link Probe Request.

FIG. 16 illustrates a block diagram of an apparatus for link operation mode switching according to an embodiment of the present disclosure. The apparatus is capable of performing the steps executed by the second device in the above-mentioned method for link operation mode switching. As illustrated in FIG. 16, the apparatus may include a receiving module 1601 and a switching module 1602.

The receiving module 1601 is configured to receive link operation mode switching information sent by a first device, where the link operation mode switching information indicates to switch a link operation mode of a first link. The first link is one of the at least two links established between the first device and the second device. The first device and the second device are multi-link devices.

The switching module 1602 is configured to switch, according to the link operation mode switching information, the link operation mode of the first link between the first device and the second device.

In some embodiments, the link operation mode switching information is carried by a Management frame that is scheduled aperiodically.

In some embodiments, the link operation mode switching information is carried by an Action frame.

In some embodiments, the link operation mode includes an MLO-based controlled operation mode and an MLO-based independent operation mode

In some embodiments, the MLO-based controlled operation mode refers to a mode in which data transmission on a corresponding link in MLO of established links is managed and controlled by another link.

In some embodiments, the MLO-based independent operation mode refers to a mode in which data transmission on a corresponding link in MLO of established links is managed and controlled by the corresponding link.

In some embodiments, the link operation mode switching information indicates at least one of: a target link operation mode for the first link to switch to, an ID of the first link, a timeout duration for link operation mode switching of the first link.

In some embodiments, link operation mode switching information includes an operation mode switch control field, and the operation mode switching control filed includes at least one of following information fields: a new operation mode subfield, a link ID bitmap subfield, or a switch timeout subfield.

The new operation mode subfield indicates the target link operation mode for the first link to switch to.

The link ID bitmap subfield indicates the ID of the first link to be switched.

The switch timeout subfield indicates the timeout duration for link operation mode switching of the first link.

In some embodiments, the switch timeout subfield contains a switch timeout code, and the switch timeout code indicates a number of time units corresponding to the timeout duration for switching of the first link.

In some embodiments, the apparatus further includes a sending module. The sending module is configured to return the link operation mode switching information to the second device, when the link operation mode switching information indicates the timeout duration for link operation mode switching of the first link and a time elapsed since the link operation mode switching information was received has not reached the timeout duration.

In some embodiments, the receiving module 1601 is configured to receive the link operation mode switching information sent by the first device through a second link when the first link is in the MLO-based controlled operation mode, where the second link is a link managing and controlling the first link.

In some embodiments, the receiving module 1601 is configured to receive the link operation mode switching information sent by the first device through the first link when the first link is in the MLO-based independent operation mode.

In some embodiments, the apparatus further includes a sending module configured to send a unicast Management frame to the first device when the first device is a non-AP multi-link device, where the unicast Management frame contains at least one of functions, capabilities, or operation parameter information of links established between the first device and the second device.

In some embodiments, the sending module is configured to send the unicast Management frame to the first device through a link in the MLO-based independent operation mode among the at least two links.

In some embodiments, the receiving module is further configured to receive a unicast Management frame sent by the first device when the first device is an AP multi-link device, where the unicast Management frame contains at least one of functions, capabilities, or operation parameter information of links established between the first device and the second device.

In some embodiments, the receiving module is configured to receive the unicast Management frame sent by the first device through a link in the MLO-based independent operation mode among the at least two links.

In some embodiments, a link in the MLO-based independent operation mode among the at least two links is used for transmitting at least one of following Management frames: a Beacon frame, an individually addressed Class 3 Management frame, an individually addressed Deauthentication frame, an individually addressed Disassociation frame, or an individually addressed Multi-link Probe Request.

In some embodiments, a link in the MLO-based controlled operation mode among the at least two links is not used for transmitting at least one of following Management frames: a Beacon frame, an individually addressed Class 3 Management frame, an individually addressed Deauthentication frame, an individually addressed Disassociation frame, or an individually addressed Multi-link Probe Request.

It should be noted that in the above embodiments, the apparatus described is merely illustrated by way of example with the division of the various functional modules described above for implementing the functions of the apparatus. In actual application, the functions described may be distributed among different functional modules according to actual needs, that is, the internal structure of the apparatus may be divided into different functional modules to complete all or part of the functions described above.

With respect to the apparatus of the above embodiments, the specific manner in which each module performs operations has been described in detail in the embodiments relating to the method, and thus will not be described in detail herein.

FIG. 17 illustrates a structural diagram of a communication device 1700 according to an embodiment of the present disclosure. The communication device 1700 may be a multi-link device. The communication device 1700 may include a processor 1701, a receiver 1702, a transmitter 1703, a memory 1704, and a bus 1705.

The processor 1701 includes one or more processing cores and executes various functional applications and information processing by running software programs and modules.

The receiver 1702 and transmitter 1703 may be implemented as a single communication component, which can be a communication chip. This communication chip may also be referred to as a transceiver.

The memory 1704 is connected to the processor 1701 via the bus 1705.

The memory 1704 may be configured to store computer programs, and the processor 1701 is configured to execute these computer programs to perform the steps executed by the terminal device in the above-mentioned method embodiments.

Additionally, the memory 1704 may be implemented by any type of volatile or non-volatile storage device or a combination thereof. The volatile or non-volatile storage device includes but is not limited to: hard disk or optical disk, electrically erasable programmable read-only memory, erasable programmable read-only memory, static random access memory, read-only memory, magnetic storage devices, flash memory, programmable read-only memory.

In an exemplary embodiment, the communication device includes a processor, a memory, and a transceiver (which can include a receiver and a transmitter, with the receiver configured for receiving information and the transmitter configured for sending information).

In a possible implementation, the processor and the transceiver can be configured to perform all or part of the steps executed by the first device or the second device in any of the embodiments illustrated in FIGS. 6, 7, or 9, as described above, which are not repeated herein.

The present disclosure also provides a computer-readable storage medium, which stores a computer program. The computer program is loaded and executed by a processor to perform the steps executed by the first device or the second device in any of the embodiments illustrated in FIGS. 6, 7, or 9.

The present disclosure also provides a computer program product, which includes computer instructions stored in a computer-readable storage medium. A processor of a communication device can read the computer instructions from the computer-readable storage medium and execute the computer instructions, causing the communication device to perform the steps executed by the first device or the second device in any of the embodiments illustrated in FIGS. 6, 7, or 9.

The present disclosure also provides a chip, which is configured to run in a communication device to cause the communication device to perform the steps executed by the first device or the second device in any of the embodiments illustrated in FIGS. 6, 7, or 9.

The present disclosure also provides a computer program, which is executable by a processor of a communication device to perform the steps executed by the first device or the second device in any of the embodiments illustrated in FIGS. 6, 7, or 9.

Skilled persons in the art should be aware that the functions described in the above embodiments of the present disclosure can be implemented in hardware, software, firmware, or any combination thereof. When implemented in software, these functions can be stored in a computer-readable medium or transmitted as one or more instructions or codes on a computer-readable medium. A computer-readable medium includes both a computer storage medium and a communication medium, where the communication medium includes any medium that facilitates the transfer of a computer program from one place to another. The storage medium can be any available medium that is accessible by a general-purpose or special-purpose computer.

The above description is merely illustrative of exemplary embodiments of the present disclosure and is not intended to limit the scope of the present disclosure. Any modifications, equivalent substitutions, improvements, etc., made within the spirit and principles of the present disclosure are intended to be included within the scope of protection of the present disclosure.

## Claims

1. A method for link operation mode switching, performed by a first device, wherein at least two links are established between the first device and a second device, the first device and the second device are multi-link devices, and the method comprises:
sending link operation mode switching information to the second device, the link operation mode switching information indicating to switch a link operation mode of a first link, the first link being one of the at least two links; and
switching, according to the link operation mode switching information, the link operation mode of the first link between the first device and the second device.

2. The method of claim 1, wherein the link operation mode switching information is carried by a Management frame that is scheduled aperiodically.

3. The method of claim 2, wherein the link operation mode switching information is carried by an Action frame.

4. The method of any one of claims 1 to 3, wherein the link operation mode comprises a multi-link operation (MLO)-based controlled operation mode and an MLO-based independent operation mode, wherein
the MLO-based controlled operation mode refers to a mode in which data transmission on a corresponding link in MLO of established links is managed and controlled by another link; and
the MLO-based independent operation mode refers to a mode in which data transmission on a corresponding link in MLO of established links is managed and controlled by the corresponding link.

5. The method of any one of claims 1 to 4, wherein the link operation mode switching information indicates at least one of:
a target link operation mode for the first link to switch to, an identifier (ID) of the first link, or a timeout duration for link operation mode switching of the first link.

6. The method of claim 5, wherein the link operation mode switching information includes an operation mode switch control field, and the operation mode switching control filed comprises at least one of following information fields:
a new operation mode subfield, a link ID bitmap subfield, or a switch timeout subfield, wherein
the new operation mode subfield indicates the target link operation mode for the first link to switch to;
the link ID bitmap subfield indicates the ID of the first link to be switched; and
the switch timeout subfield indicates the timeout duration for link operation mode switching of the first link.

7. The method of claim 6, wherein the switch timeout subfield contains a switch timeout code, and the switch timeout code indicates a number of time units corresponding to the timeout duration for switching of the first link.

8. The method of any one of claims 5 to 7, wherein switching, according to the link operation mode switching information, the link operation mode of the first link between the first device and the second device comprises:
when the link operation mode switching information indicates the timeout duration for link operation mode switching of the first link and a time elapsed since the link operation mode switching information was sent reaches the timeout duration, if no link operation mode switching information returned by the second device has been received,
switching, according to the link operation mode switching information, the link operation mode of the first link between the first device and the second device.

9. The method of any one of claims 5 to 7, wherein switching, according to the link operation mode switching information, the link operation mode of the first link between the first device and the second device comprises:
when the link operation mode switching information indicates the timeout duration for link operation mode switching of the first link and a time elapsed since the link operation mode switching information was sent has not reached the timeout duration, if the link operation mode switching information returned by the second device is received,
switching, according to the link operation mode switching information, the link operation mode of the first link between the first device and the second device.

10. The method of any one of claims 1 to 4, wherein switching, according to the link operation mode switching information, the link operation mode of the first link between the first device and the second device comprises:
switching, according to the link operation mode switching information, the link operation mode of the first link between the first device and the second device if the link operation mode switching information returned by the second device is received.

11. The method of any one of claims 1 to 10, wherein sending the link operation mode switching information to the second device comprises:
sending the link operation mode switching information to the second device through a second link when the first link is in an MLO-based controlled operation mode, wherein the second link is a link managing and controlling the first link.

12. The method of any one of claims 1 to 10, wherein sending the link operation mode switching information to the second device comprises:
sending the link operation mode switching information to the second device through the first link when the first link is in an MLO-based independent operation mode.

13. The method of claim 4, wherein the first device is a non-access point (AP) multi-link device, and the method further comprises:
receiving a unicast Management frame sent by the second device, wherein the unicast Management frame contains at least one of functions, capabilities, or operation parameter information of links established between the first device and the second device.

14. The method of claim 13, wherein receiving the unicast Management frame sent by the second device comprises:
receiving the unicast Management frame sent by the second device through a link in the MLO-based independent operation mode among the at least two links.

15. The method of claim 4, wherein the first device is an AP multi-link device, and the method further comprises:
sending a unicast Management frame to the second device, wherein the unicast Management frame contains at least one of functions, capabilities, or operation parameter information of links established between the first device and the second device.

16. The method of claim 15, wherein sending the unicast Management frame to the second device comprises:
sending the unicast Management frame to the second device through a link in the MLO-based independent operation mode among the at least two links.

17. The method of claim 4, wherein a link in the MLO-based independent operation mode among the at least two links is used for transmitting at least one of following Management frames:
a Beacon frame, an individually addressed Class 3 Management frame, an individually addressed Deauthentication frame, an individually addressed Disassociation frame, or an individually addressed Multi-link Probe Request.

18. The method of claim 4, wherein a link in the MLO-based controlled operation mode among the at least two links is not used for transmitting at least one of following Management frames:
a Beacon frame, an individually addressed Class 3 Management frame, an individually addressed Deauthentication frame, an individually addressed Disassociation frame, or an individually addressed Multi-link Probe Request.

19. A method for link operation mode switching, performed by a second device, wherein at least two links are established between a first device and the second device, the first device and the second device are multi-link devices, and the method comprises:
receiving link operation mode switching information sent by the first device, the link operation mode switching information indicating to switch a link operation mode of a first link, the first link being one of the at least two links; and
switching, according to the link operation mode switching information, the link operation mode of the first link between the first device and the second device.

20. The method of claim 19, wherein the link operation mode switching information is carried by a Management frame that is scheduled aperiodically.

21. The method of claim 20, wherein the link operation mode switching information is carried by an Action frame.

22. The method of any one of claims 19 to 21, wherein the link operation mode comprises a multi-link operation (MLO)-based controlled operation mode and an MLO-based independent operation mode, wherein
the MLO-based controlled operation mode refers to a mode in which data transmission on a corresponding link in MLO of established links is managed and controlled by another link; and
the MLO-based independent operation mode refers to a mode in which data transmission on a corresponding link in MLO of established links is managed and controlled by the corresponding link.

23. The method of any one of claims 19 to 22, wherein the link operation mode switching information indicates at least one of:
a target link operation mode for the first link to switch to, an identifier (ID) of the first link, a timeout duration for link operation mode switching of the first link.

24. The method of claim 23, wherein the link operation mode switching information includes an operation mode switch control field, and the operation mode switching control filed includes at least one of following information fields:
a new operation mode subfield, a link ID bitmap subfield, or a switch timeout subfield, wherein
the new operation mode subfield indicates the target link operation mode for the first link to switch to;
the link ID bitmap subfield indicates the ID of the first link to be switched; and
the switch timeout subfield indicates the timeout duration for link operation mode switching of the first link.

25. The method of claim 24, wherein the switch timeout subfield contains a switch timeout code, and the switch timeout code indicates a number of time units corresponding to the timeout duration for switching of the first link.

26. The method of any one of claims 23 to 25, further comprising:
returning the link operation mode switching information to the second device, when the link operation mode switching information indicates the timeout duration for link operation mode switching of the first link and a time elapsed since the link operation mode switching information was received has not reached the timeout duration.

27. The method of any one of claims 19 to 26, wherein receiving the link operation mode switching information sent by the first device comprises:
receiving the link operation mode switching information sent by the first device through a second link when the first link is in an MLO-based controlled operation mode, wherein the second link is a link managing and controlling the first link.

28. The method of any one of claims 19 to 26, wherein receiving the link operation mode switching information sent by the first device comprises:
receiving the link operation mode switching information sent by the first device through the first link when the first link is in an MLO-based independent operation mode.

29. The method of claim 22, wherein the first device is a non-access point (AP) multi-link device, and the method further comprises:
sending a unicast Management frame to the first device, wherein the unicast Management frame contains at least one of functions, capabilities, or operation parameter information of links established between the first device and the second device.

30. The method of claim 29, wherein sending the unicast Management frame to the first device comprises:
sending the unicast Management frame to the first device through a link in the MLO-based independent operation mode among the at least two links.

31. The method of claim 22, wherein the first device is an AP multi-link device, and the method further comprises:
receiving a unicast Management frame sent by the first device, wherein the unicast Management frame contains at least one of functions, capabilities, or operation parameter information of links established between the first device and the second device.

32. The method of claim 31, wherein receiving the unicast Management frame sent by the first device comprises:
receiving the unicast Management frame sent by the first device through a link in the MLO-based independent operation mode among the at least two links.

33. The method of claim 22, wherein a link in the MLO-based independent operation mode among the at least two links is used for transmitting at least one of following Management frames:
a beacon frame, an individually addressed Class 3 Management frame, an individually addressed Deauthentication frame, an individually addressed Disassociation frame, or an individually addressed multi-link probe request.

34. The method of claim 22, wherein a link in the MLO-based controlled operation mode among the at least two links is not used for transmitting at least one of following Management frames:
a beacon frame, an individually addressed class 3 Management frame, an individually addressed Deauthentication frame, an individually addressed Disassociation frame, or an individually addressed multi-link probe request.

35. An apparatus for link operation mode switching, comprising:
a sending module configured to send link operation mode switching information to a second device, wherein the link operation mode switching information indicates to switch a link operation mode of a first link, the first link is one of at least two links established between a first device and the second device, and the first device and the second device are multi-link devices; and
a switching module configured to switch, according to the link operation mode switching information, the link operation mode of the first link between the first device and the second device.

36. An apparatus for link operation mode switching, comprising:
a receiving module configured to receive link operation mode switching information sent by a first device, wherein the link operation mode switching information indicates to switch a link operation mode of a first link, the first link is one of at least two links established between the first device and a second device, and the first device and the second device are multi-link devices; and
a switching module configured to switch, according to the link operation mode switching information, the link operation mode of the first link between the first device and the second device.

37. A communication device, implemented as a first device, wherein at least two links are established between the first device and a second device, the first device and the second device are multi-link devices, and the communication device comprises a processor, a memory, and a transceiver, wherein
the transceiver is configured to send link operation mode switching information to the second device, the link operation mode switching information indicating to switch a link operation mode of a first link, the first link being one of the at least two links; and
the processor is configured to switch, according to the link operation mode switching information, the link operation mode of the first link between the first device and the second device.

38. A communication device, implemented as a second device, wherein at least two links are established between a first device and the second device, the first device and the second device are multi-link devices, and the communication device comprises a processor, a memory, and a transceiver, wherein
the transceiver is configured to receive link operation mode switching information sent by the first device, the link operation mode switching information indicating to switch a link operation mode of a first link, the first link being one of the at least two links; and
the processor is configured to switch, according to the link operation mode switching information, the link operation mode of the first link between the first device and the second device.

39. A computer-readable storage medium storing a computer program which is executable by a processor to implement the method of any one of claims 1 to 34.

40. A chip configured to run in a communication device to cause the communication device to execute the method of any one of claims 1 to 34.

41. A computer program product comprising computer instructions, wherein the computer instructions are stored in a computer-readable storage medium, a processor of a communication device reads the computer instructions from the computer-readable storage medium and executes the computer instructions to cause the communication device to execute the method of any one of claims 1 to 34.

42. A computer program executable by a processor of a communication device to implement the method of any one of claims 1 to 34.
